# EUROPEAN PATENT APPLICATION

(11) **EP 1 873 626 A2**
(43) Date of publication of application: **02.01.2008**
(21) Application number: 07252577.7
(22) Date of filing: 26.06.2007
(51) Int. Cl.: G06F 3/12

(54) **Printing control method, printing control device, printing system, terminal device, program, and recording medium**

(30) Priority: 27.06.2006 JP 2006177173
(71) Applicant: Ricoh Company, Ltd., Tokyo 143-8555 (JP)
(72) Inventor: Iwasaki, Masajiro, Yokohama-shi, Kanagawa (JP)
(74) Representative: Leeming, John Gerard

(57) **Abstract**

In a printing control method and device, a processing method for print data is extracted from a processing-method storage unit in which information, contained in print data received from a terminal device, and processing methods associated with the information are stored, by accessing the processing-method storage unit using the information as a key. A print processing data is acquired based on the extracted processing method.

## Description

This invention relates to a printing control method for use in a printing system, a printing control device, a printing system, a terminal device, a computer-readable program, and a computer-readable recording medium having program code stored thereon.

There is a printing control demand wherein, when performing a printing on a printer according to a printing request from an application program, the printing request is transmitted to a server, a predetermined processing (such as a security procedure) is performed by the server, such that the printing is performed on the printer only after the predetermined processing is passed. For example, see Japanese Laid-Open Patent Application No. 2004-185325.

In the print server disclosed in Japanese Laid-Open Patent Application No. 2004-185325, a document for a received printing request is matched with the print permission conditions transmitted by the administrator, and when permission is required for printing of the document concerned, a request for print permission is sent to the administrator.
Thereby, a predetermined security management in printing documents can be performed through the print server.

In order to request a server to perform predetermined processing, it is necessary to incorporate into individual application programs the print requesting function to access a server and request the server to perform the predetermined processing. However, it is practically difficult to incorporate the same function into all the application programs that perform printing.

Moreover, if individual application programs access the server each time a printing request is inputted, the application programs may access the accumulated data in the server very frequently. In such a case, an undesired security problem, such as leakage of the accumulated data from the server, may take place.

According to one aspect of the invention, there is provided an improved printing control device and method in which the above-described problems are eliminated.

According to one aspect of the invention there is provided a printing control device and method adapted to realize the server printing management for preventing leakage of accumulated information without incorporating into individual application programs the print requesting function to request the server to perform printing management.

In an embodiment of the invention which solves or reduces one or more of the above-mentioned problems, there is provided a printing control method for use in a printing system which performs a predetermined processing in response to a printing request from a terminal device and acquires a print processing data, the method comprising steps of: extracting a processing method for print data from a processing-method storage unit in which information contained in print data received from a terminal device and processing methods associated with the information are stored, by accessing the processing-method storage unit using the information as a key; and acquiring a print processing data based on the extracted processing method.

The above-mentioned printing control method may be configured so that the step of extracting the processing method includes a step of extracting an image ID from image data contained in the print data received from the terminal device.

The above-mentioned printing control method may be configured so that the step of extracting the processing method includes steps of: retrieving a similar image which is identical or similar to an image indicated by image data contained in the print data received from the terminal device, from an image-data storage unit in which a plurality of image data are stored beforehand; and extracting an image ID of the image data based on the similar image retrieved in the retrieving step.

The above-mentioned printing control method may be configured so that the step of acquiring the print processing data is provided to access an output database in which a plurality of print processing data associated with image IDs are stored, using the image ID as a key, and acquire the print processing data from the output database.

The above-mentioned printing control method may be configured so that the printing control method further comprises a step of authenticating a user who operates the terminal device, wherein, when the user is not authenticated as a result of the authenticating step, the step of acquiring the print processing data is provided to acquire image data having a quality level lower than a quality level of the image data contained in the received print data, or acquire no image data.

The above-mentioned printing control method may be configured so that the image data having the quality level lower than the quality level of the image data contained in the print data is selected from among a set of image data including image data having a resolution lower than a resolution of the image data contained in the print data, image data created by superimposing a predetermined character code to the image data contained in the print data, image data having a fixed intensity, and image data different from the image data contained in the print data.

The above-mentioned printing control method may be configured so that the processing-method storage unit is provided to store processing methods associated with predetermined character strings, and the step of extracting the processing method includes steps of:
accessing the processing-method storage unit by using a character string contained in the received print processing data as a key; and
extracting the processing method associated with the character string obtained from the processing-method storage unit.

The above-mentioned printing control method may be configured so that the extracted processing method specifies processing which substitutes a filling-in processed data for the character string contained in the received print processing data.

In an embodiment of the invention which solves or reduces one or more of the above-mentioned problems, there is provided a printing control device which performs a predetermined processing in response to a printing request from a terminal device and acquires a print processing data, the printing control device comprising: a processing-method storage unit in which information contained in print data received from the terminal device and processing methods associated with the information are stored; a processing-method extraction unit extracting a processing method for print data from the processing-method storage unit by using the information as a key; and a print-processing-data acquisition unit acquiring a print processing data based on the extracted processing method.

According to the embodiments of the printing control device and method of the invention, it is possible to realize the server printing management for preventing leakage of accumulated information without incorporating into individual application programs the print requesting function to request the server to perform printing management.

Other objects, features and advantages of the present invention will be apparent from the following detailed description when reading in conjunction with the accompanying drawings.
FIG. 1 is a block diagram showing the composition of a printing system in an embodiment of the invention.
FIG. 2A and FIG. 2B are diagrams showing the hardware composition of each of a terminal device (computer) and a print control server respectively.
FIG. 3A, FIG. 3B and FIG. 3C are diagrams showing the contents of information stored in a control database, a display database, and an output database respectively.
FIG. 4 is a flowchart for explaining the procedure in which the printer control server registers a print image and a display image.
FIG. 5A and FIG. 5B are diagrams showing examples of Web page on which a display image is arranged.
FIG. 6 is a flowchart for explaining the procedure in which the printing system prints a Web page.
FIG. 7 is a block diagram showing the composition of a printing system in an embodiment of the invention.
FIG. 8 is a flowchart for explaining the procedure in which the printer control server registers a print image and a display image.
FIG. 9 is a flowchart for explaining the procedure in which the printing system prints a Web page.
FIG. 10 is a block diagram showing the composition of a printing system in an embodiment of the invention.
FIG. 11 is a flowchart for explaining the procedure in which the printing system prints a Web page.
FIG. 12 is a block diagram showing the composition of a printing system in an embodiment of the invention.
FIG. 13 is a flowchart for explaining the procedure in which the printer control server registers a print image and a display image.
FIG. 14A, FIG. 14B and FIG. 14C are diagrams showing examples of non-authentication images.
FIG. 15 is a flowchart for explaining the procedure in which the printing system prints a Web page.
FIG. 16 is diagram showing a printed result in which a Web page containing a non-authentication image substituted for a display image of the Web page is printed.
FIG. 17A and FIG. 17B are diagrams showing an example of a printed result in which a Web page containing a print image substituted for a display image is printed.
FIG. 18A and FIG. 18B are diagrams showing examples of the contents of information stored in an authentication database and an output database, respectively.
FIG. 19 is a block diagram showing the composition of a printing system in an embodiment of the invention.
FIG. 20 is a diagram showing an example of association between key texts and processing methods stored in a text control database.
FIG. 21A and FIG. 21B are diagrams showing an example of the printed result in which a Web page containing a filling-in processed image substituted for a predetermined key text of the Web page is printed.
FIG. 22 is a flowchart for explaining the procedure in which the printer control server registers a key text and a processing method.
FIG. 23 is a flowchart for explaining the procedure in which the printing system prints a Web page.

A description will be given of embodiments of the invention with reference to the accompanying drawings.

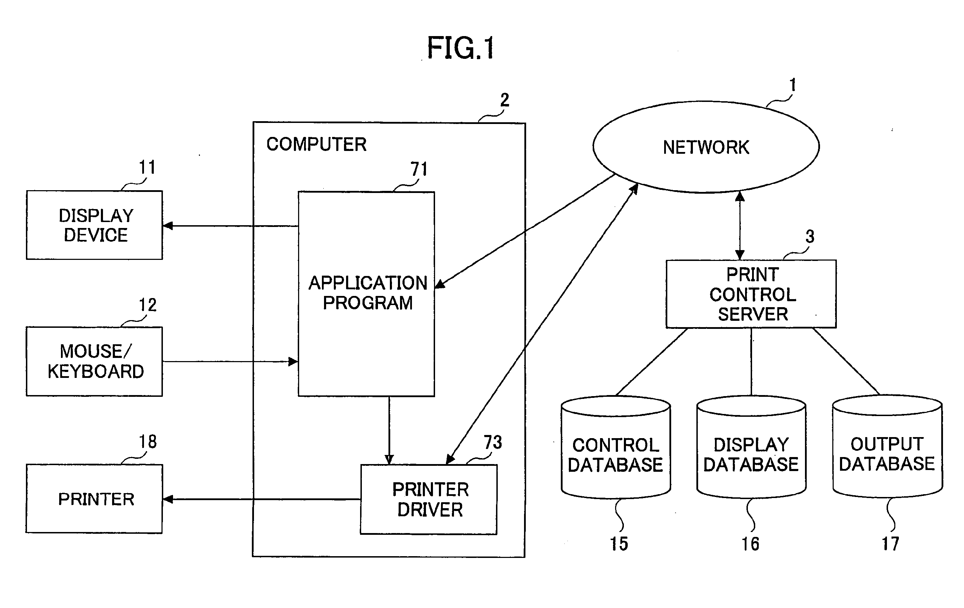

FIG. 1 shows the composition of a printing system in an embodiment of the invention. In the printing system of FIG. 1, a computer 2 and a print control server 3 are connected via a network 1. The computer 2 constitutes a terminal device in the claims. The print control server 3 constitutes a printing control device in the claims.

The print control server 3 is provided with a control database 15, a display database 16, and an output database 17. Various application programs 71 are installed in the computer 2, and an image of a printing object (or a document) generated by one of the application programs 71 is displayed on a display device 11.

When a user operates an input unit 12, such as a mouse or keyboard, to print a document, the application program 71 concerned transmits a printing request to a printer driver 73.

The printer driver 73 is connected to the print control server 3 via the network 1, and transmits image data contained in the document to the print control server 3. The print control server 3 receives the image data from the computer 2, performs print processing based on control information which is stored in the control database 15, and transmits the result of the print processing to the application program 71 concerned.

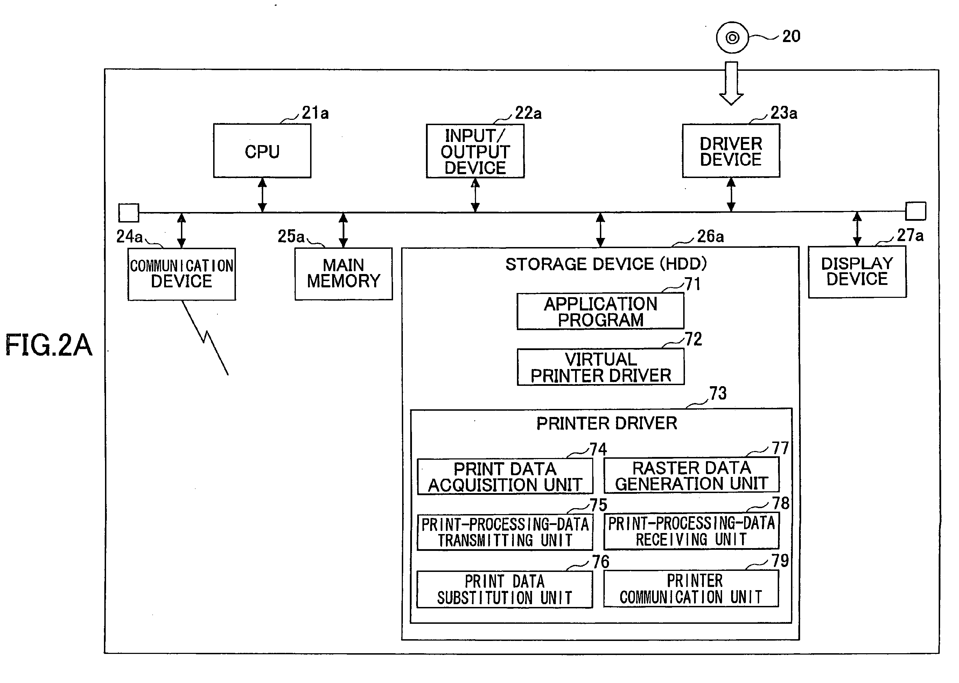

FIG. 2A shows the hardware composition of the computer 2 in the printing system of FIG. 1. As shown in FIG. 2A, the computer 2 is constituted so that it includes a CPU 21a, an I/O device 12, a drive device 23a, a communication device 24a, a main memory 25a, a storage device 26a, and a display device 27a which are interconnected by a bus respectively.

The CPU 21a loads programs, such as an operating system (OS) and application programs, from the storage device 26a, and provides various functions. The CPU 21a generally controls the processing performed by the computer 2.

The I/O device 12 includes a keyboard, a mouse, etc., and this I/O device 12 is used by a user to input various operational commands and data.

The communication device 24a is an interface for connecting the computer 2 to the network 1, such as the Internet and LAN. For example, the communication device 24a is constituted by a modem, a router, etc.

The main memory 25a provides a storage region in which the operating system, the programs and data are stored temporarily. In the drive device 23a, a DVD-ROM or CD-ROM can be inserted. The drive device 23a is provided to read a program and data from a recording medium 20, and to write a program and data to the recording medium 20. The display device 27a provides a user with a GUI (Graphical User Interface) screen, and displays various windows, data, etc. needed for operation of the computer 2 on the display device 11.

An application program 71, a printer driver 73, and a virtual printer driver 72 are installed in the storage device 26a. The application program 71 is constituted by a document processing support program, a spreadsheet program, or an Internet browser, and the application program 71 provides a document of a printing object.

For example, when a user starts printing of a printing object, the application program 71 and the OS (operating system) transmit the printing object to the printer driver 73 in the form of print data.

Although the print data is finally transmitted to the printer 18, the print data may be converted into one of some formats which are different from the format of the original print data before being transmitted to the printer 18. However, in this embodiment, the print data will be mentioned without distinguishing the respective formats. The print data in a certain case is equivalent to image drawing codes.

The printer driver 73 converts the print data received from the application program 71 into the data in the format that can be printed by the printer 18 according to the specifications, the print controlling method, etc. of the printer 18 connected to the computer 2, and transmits the resulting data to the printer 18.

Alternatively, the printer driver 73 may convert the print data into raster data, or the printer 18 may generate raster data.

The printer driver 73 of this embodiment includes the following elements 74 to 79. The print-data acquisition unit 74 acquires print data from the application program 71. The print-processing-data transmitting unit 75 transmits the print data to the print control server 3. The print-data substitution unit 76 substitutes the print processing data received from the print control server 3, for a part of the print data. The raster-data generation unit 77 generates raster data from the print data.
The print processing data receiving unit 78 receives a print processing data from the print control server 3. And the printer communication unit 79 transmits the print data to the printer 18.

The virtual printer driver 72 will be described in greater detail later. The virtual printer driver 72 performs a transfer operation between the application program which sends a printing request and the printer driver 73 which performs printing, and provides the functions that are the same as the functions of the printer driver 73.

The print-processing-data transmitting unit 75 transmits all or some of the print data (or image data or text data contained in the print data) to the print control server 3.
Especially, in the case of transmitting image data, the print-processing-data transmitting unit 75 serves as an image-data transmitting unit that transmits image data to the print control server 3.

Each of the respective programs of the application program 71, the printer driver 73, and the virtual printer driver 72 in the computer 2 may be realized by a computer-readable recording medium having program code stored thereon which, when executed by a computer, causes the computer to perform the corresponding function of the program. The CPU 21a loads each program from the storage device 26a on which the above programs are recorded, into the main memory 25a and executes the program on the main memory 25a.

For example, the programs, including the printer driver 73, are supplied to the computer 2 by a recording medium 20, such as DVD-ROM.
The recording medium 20 on which the printer driver 73 is recorded is set in the drive device 23a, so that the printer driver 73 from the recording medium 20 is installed in the storage device 26a. The recording medium 20 on which the printer driver 73 is recorded may be selected from among various recording media including a CD-ROM, a DVD-ROM, a flexible disk, a magneto-optic disk (MO), a ROM, a flash memory, etc. And the print processing program may be downloaded to the computer 2 through a network.

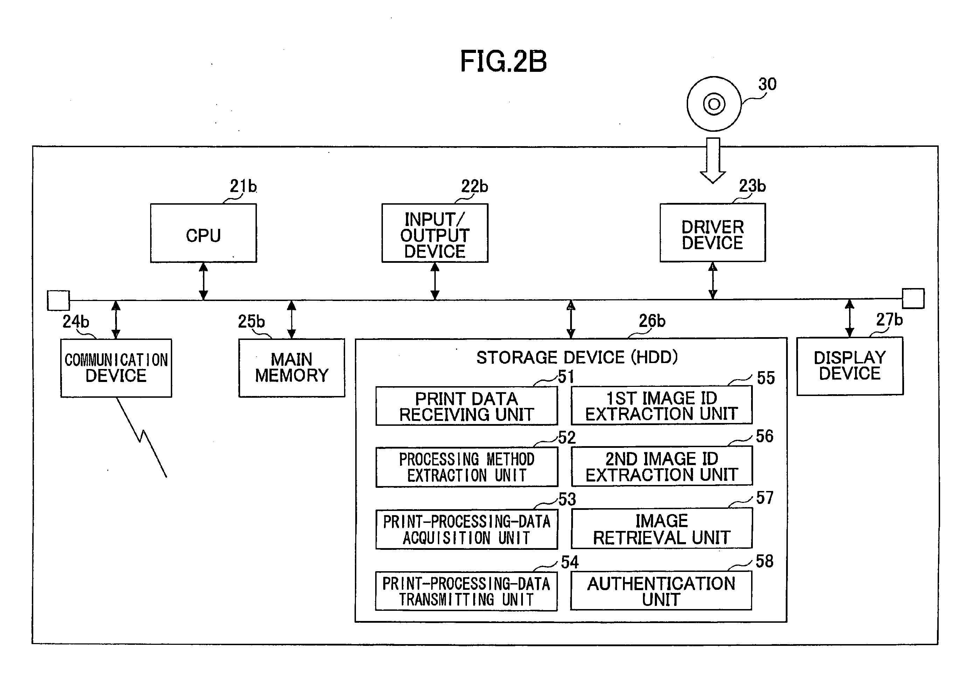

FIG. 2B shows the hardware composition of the print control server 3 in the printing system of FIG. 1. In FIG. 2B, the elements which are the same as corresponding elements in FIG. 2A are designated by the same reference numerals, and a description thereof will be omitted.

As shown in FIG. 2B, the storage device 26b of the print control server 3 includes a print-data receiving unit 51, a processing-method extraction unit 52, a print-processing-data acquisition unit 53, a print-processing-data transmitting unit 54, a first image ID acquisition unit 55, a second image ID acquisition unit 56, an image retrieval unit 57, and an authentication unit 58.

The print-processing-data receiving unit 51 receives the print data from the computer 2. Especially, in the case of receiving image data, the print data receiving unit 51 serves as an image-data receiving unit that receives image data from the computer 2.

The processing-method extraction unit 52 extracts a processing method of the print data received from the control database 15. The print-processing-data acquisition unit 53 acquires the print processing data based on the processing method extracted by the processing-method extraction unit 52.

Since the print processing data in this embodiment is image data, the print processing data is called also a print image. Especially, in the case of acquiring a print image, the print-processing-data acquisition unit 53 serves as a print-image acquisition unit that acquires a print image based on the extracted processing method.

The print-processing-data transmitting unit 54 transmits the print processing data (or the print image) acquired by the print-processing-data acquisition unit 53, to the computer 2. Especially, in the case of transmitting a print image, the print-processing-data transmitting unit 54 serves as a print-image transmitting unit that transmits a print image to the computer 2.

The first image ID extraction unit 55 extracts an image ID that identifies the image concerned, from the image data received by the image-data receiving unit 51. The image retrieval unit 57 retrieves a similar image which is identical or similar to an image of the image data received by the image-data receiving unit 51, from the display database 16 in which a plurality of image data associated with image IDs are stored beforehand. The second image ID extraction unit 56 extracts an image ID of the image concerned based on the similar image retrieved by the image retrieval unit 57. The authentication unit 58 authenticates the user who operates the computer 2.

Each of the respective elements 51 to 58 of the storage device 26b, including the image-data receiving unit 51 and others, is recorded on the storage device 26b as a program (which is called a print processing program) which realizes the print processing method of the print control server 3. And the CPU 21b loads each program from the storage device 26b into the main memory 25b and executes the program on the main memory 25b.

For example, the print processing program is supplied to the print control server 3 by a recording medium 30, such as DVD-ROM.
The recording medium 30 on which the print processing program is recorded is set in the drive device 23b, so that the program from the recording medium 30 is installed in the storage device 26b.

The recording medium 30 on which the print processing program is recorded may be selected from among various recording media including a CD-ROM, a DVD-ROM, a flexible disk, a magneto-optic disk (MO), a ROM, a flash memory, etc. And the print processing program may be downloaded to the print control server 3 through a network.

Next, the control database 15 (which is equivalent to the processing-method storage unit in the claims), the display database 16, and the output database 17 will be explained.

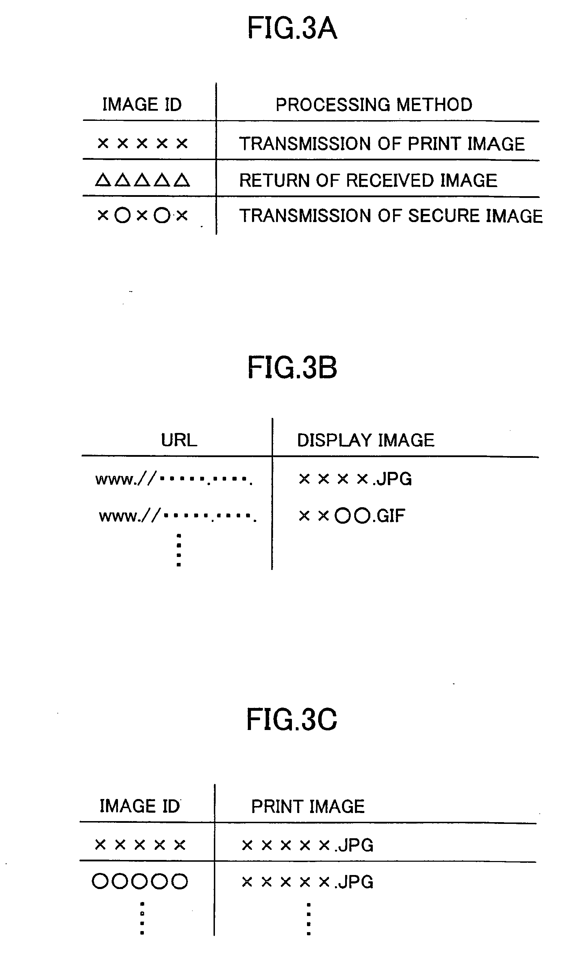

FIG. 3A shows an example of the contents of information stored in the control database 15. As shown in FIG. 3A, in the control database 15, a plurality of processing methods associated with a plurality of image IDs respectively are registered. The processing method extraction unit 52 extracts a processing method from the control database 15 based on the image ID concerned.

In the present specification, the expression "transmitting a print image" means transmitting a print image, having a relatively high quality level, from the output database 17 to the terminal device (computer 2) via the network 1. The expression "returning a received image" means returning a received print image without changing the quality level of the received print. The expression "transmitting a security controlled image" means transmitting a processed image selected from among a set of image data, including the image created by superimposing a given character code, like " 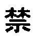 " (inhibited), to the received image, a completely different image from the received image, a solidly black image, a relatively low quality image, etc.

FIG. 3B shows an example of the contents of information stored in the display database 16. As shown in FIG. 3B, the display database 16 is a database in which a plurality of display images (or thumbnail images) used by the computer 2 when displaying a Web page are stored. In the display database 16, a plurality of display images associated with a plurality of URLs (which are used by the Web application server to retrieve the display image concerned) respectively are registered.

FIG. 3C shows an example of the contents of information stored in the output database 17. As shown in FIG. 3C, the output database 17 is a database in which a plurality of print images (which are printed by the printer 18 under the control of the printer driver 73) associated with a plurality of image IDs respectively are registered. It is preferred that the print images have a resolution (the pixel number or the color number) which is higher than that of the display images.

Next, an embodiment of the printing system in which a display image (thumbnail image) contained in the document displayed on the computer 2 is substituted for a print image and it is outputted using the above-mentioned composition will be explained. Suppose that the application program 71 in this embodiment includes a Web browser and the print control server 3 in this embodiment includes a Web application server.

Since, for this embodiment, it is necessary to register a print image into the output database 17 beforehand and register a display image into the display database 16 beforehand, respectively. A description will now be given of the processing to register the print image and the display image into the printer control server 3.

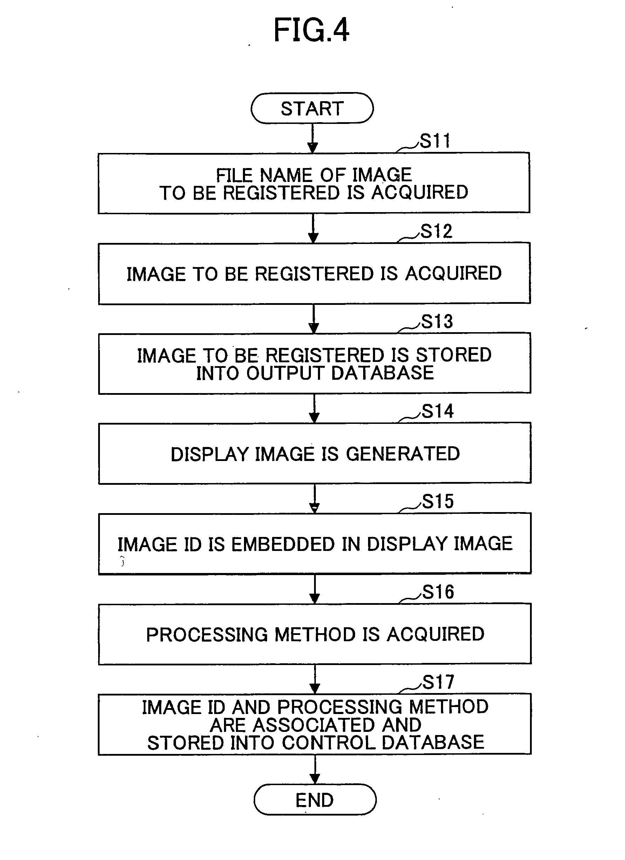

FIG. 4 is a flowchart for explaining the procedure in which the printer control server 3 registers a print image and a display image.

The images to be registered may be transmitted from the storage device 26a of the computer 2 to the printer control server 3 via the network 1. Or they may be stored in the storage device 26b of the printer control server 3.

Upon start of the procedure of FIG. 4, the printer control server 3 acquires a file name of an image of the registration object inputted by the user through the I/O device 12 (S11). After the file name is acquired, the printer control server 3 acquires the image of the registration object from the storage device 26b of the printer control server 3 (S12).

Subsequently, the printer control server 3 registers the image of the registration object into the output database 17 as a print image (S13). The printer control server 3 gives an image ID for identifying the print image to the print image based on the date of registration or the order of registration. The print image associated with the image ID is stored into the output database 17.

Subsequently, the printer control server 3 generates a display image which is used when displaying the image of the registration object in a simplified form (S14). The display image is constituted by image data with a small storage capacity to which the pixels of the image of the registration object are reduced at a predetermined rate. This image is called a thumbnail image.

After the display image is generated, the printer control server 3 embeds a digital watermarking in the display image (S15). The contents of this digital watermarking are the image ID. The method of embedding a digital watermarking may be selected from various known methods including an optical density diffusion method, a dithering method, an error diffusion method, etc. (which are used in the case of a monochrome image), and a pixel substitution method, a pixel-space utilizing method, a frequency-domain utilizing method, a digital-watermarking method applied to a multi-valued color image using Fresnel conversion, a synthetic encoding method of text data to an image of color optical density pattern, etc. (which are used in the case of a multi-valued image). The display image in which the image ID is embedded is stored into the display database 16 by the Web application server.

Subsequently, the printer control server 3 acquires a processing method which is inputted by the user through the I/O device 12 (S16).
The acquired processing method is stored into the control database 15 as one of the processing methods registered. The processing-method extraction unit 52 will extract this processing method from the control database 15 after a display image is transmitted from the computer 2 to the printer control server 3 via the network 1. For example, when printing an image containing the display image concerned, the user may input the processing method which specifies transmitting of the print image instead of the display image. A plurality of processing methods may be registered for a single image of the registration object.

The printer control server 3 associates the acquired processing method with the image ID, and registers them in the control database 15. (S17). By the above processing, the print image is registered in the output database 17, the display image in which the digital watermarking (image ID) is embedded is registered in the display database 16, and the processing method corresponding to the print image is registered in the control database 15, respectively.

If the URL is known, the display image can be retrieved. Since the Web application server usually has the function to retrieve the URL of the registered file (in this case, display image), the computer 2 is capable of using the display image as an image which constitutes a Web page displayed by the Web browser.

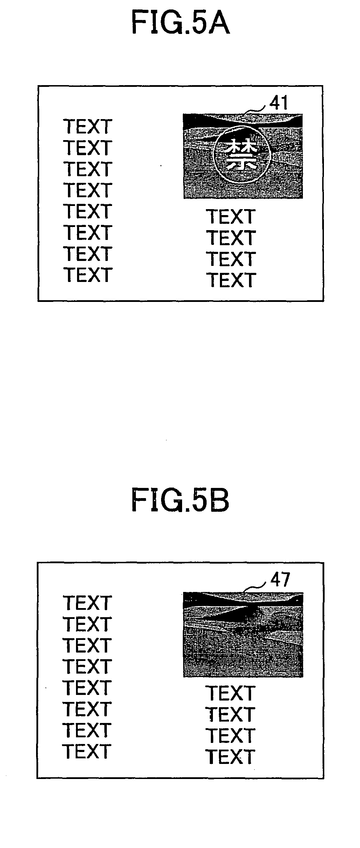

FIG. 5A shows an example of a Web page on which a display image 41 is arranged. In FIG. 5A, the display image 41 is arranged on the right-hand side of the Web page, whereas the text is displayed on the bottom and the lefthand side of the display image 41. The method of creating a Web page is optional. The Web page is usually described in any of HTML (HyperText Markup Language), XML (extensible Markup Language), etc., and it is stored in the Web application server. The display image 41 in this example has a quality level lower than a quality level of the image of the registration object as described above.

The image ID (or the digital watermarking) is embedded in the display image 41. Thus, if the image ID of the digital watermarking is read from the display image 41, the print image registered in the output database 17 can be retrieved.

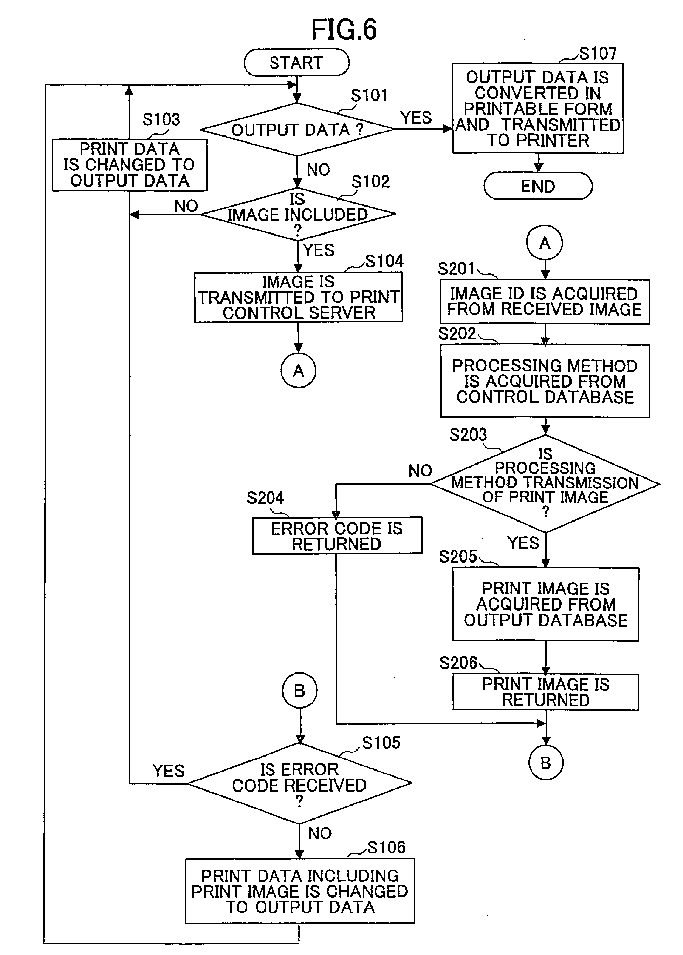

Next, FIG. 6 is a flowchart for explaining the procedure in which the printing system prints the Web page displayed as in FIG. 5A. In this embodiment, when printing the Web page, the print image registered in the output database 17 is used instead of the display image.

In the procedure of FIG. 6, the processing of steps S101-S107 is performed by the computer 2 (the terminal device), whereas the processing of steps S201-S206 is performed by the print control server 3 (the printing control device).

Since a quality level of an image reproduced through scanning of a print image (printed on paper) by a scanner becomes degraded from a quality level of the original image data (the image of the registration object), this will suppress reuse of the reproduced image by a third party.

When a printing operation is performed by the application program 71 (in this embodiment, a Web browser), the Web page of FIG. 5A is transmitted to the printer driver 73 by the application program 71. And the printer driver 73 generates print data from the received Web page.

Upon start of the procedure of FIG. 6, the printer driver 73 determines whether the print data is set to be output data (S101). For example, a judgment flag may be used to determine whether the print data is set to be output data. In this case, whether the print data is set to be output data is determined according to the active/inactive state of the judgment flag.

Immediately after the print data is generated by the printer driver 73, the initial state of the judgment flag is not yet changed to the active state which indicates that the print data is set to be output data. The result of determination of step S101 for the first time is negative (No).

Subsequently, the printer driver 73 determines whether the print data contains an image (S102).

When an image is not included in the print data (No of step S102), the state of the judgment flag is changed to the active state, and the print data is changed to output data (S103). Whether the print data contains an image or not can be determined by reading the property or meta-file extension of the file of the print data.

When an image is included in the print data (Yes of step S102), the image-data transmitting unit 75 of the printer driver 73 transmits the image data included in the print data to the print control server 3 (S104). And the processing control is shifted to the print control server 3.

The first image-ID extraction unit 55 of the print control server 3 acquires an image ID embedded in the digital watermarking from the received image data (S201). Alternatively, the print control server 3 may receives the image ID itself sent from the printer driver 73.

Subsequently, the processing-method extraction unit 52 of the print control server 3 accesses the control database 15 and extracts a processing method associated with the image ID from the control database 15 (S202). In this embodiment, the print control server 3 is requested that a print image is printed. The print control server 3 determines whether the extracted processing method indicates transmission of a print image (S203).

When the extracted processing method does not indicate transmission of a print image (No of S203), the print control server 3 transmits a predetermined error code to the printer driver 73 (S204).

When the extracted processing method indicates transmission of a print image (Yes of S203), the print-image acquisition unit 53 of the print control server 3 accesses the output database 17 and acquires a print image associated with the image ID from the output database 17 (S205). Subsequently, the print control server 3 transmits the print image to the printer driver 73 via the network 1 (S206).

Alternatively, the print image may be transmitted to another server (for example, an image collection server) instead of the computer 2.

The processing control is shifted to the printer driver 73. The printer driver 73 determines whether an error code is received (S105). When an error code is received, it shows that the print image is not transmitted. The state of the judgment flag is changed to the active state, and the print data containing the display image is changed to output data (S103).

On the other hand, when an error code is not received (or when a print image is transmitted to the computer 2), the print data substitution unit 76 substitutes the received print image for the display image and determines that the print data is changed to the output data (S106).

Progressing to step S107, the printer driver 73 converts the output data into the data in a format that can be printed by the printer 18 concerned, and the printer communication unit 79 transmits the resulting data to the printer 18 (S107). It is preferred to record a log which indicates the contents of the processing performed, the identification information of the computer 2, the user information, etc.

FIG. 5B shows the printed result of the Web page in which the print image 47 is substituted for the display image 41.

Since the print image 47 has a high quality level with a larger pixel number or large color number, it can be substituted for the display image and printed under the control of the print control server.

As mentioned above, according to this embodiment, the printing request of the computer 2 can be uniformly processed by the print control server 3. The print control server can perform any of various processings, such as substitution of an image, according to the processing method registered in the control database 15. Since the printer driver carries out the print processing of the computer 2, it is not necessary to incorporate the function of print processing into the application program 71.

In the above embodiment, a print image is registered in the output database 17 beforehand and a print image corresponding to the image ID contained in the image (original image) received from the terminal device 2 is extracted from the output database 17. Alternatively, the original image received from the terminal device 2 may be processed to generate a print image.

Specifically, in such alternative embodiment, the print control server 3 extracts an image ID from the original image received from the terminal device 2, and accesses the control database 15 based on the image ID to extract a processing method from the control database 15. And the processing method and the original image are transmitted to an image-processing server. The image-processing server processes the original image according to the processing method to generate a print image, and transmits the generated print image to the print control server 3. By the image processing of the original image, the quality level of image can be lowered or the original image can be converted into a processed image on which given characters "confidential" are superimposed.

By the above processing, it is no longer necessary to store the print image into the output database 17 beforehand, and the print control server 3 can acquire a print image. Alternatively, a print image may be generated by the print control server 3 instead of the image-processing server.

Next, a description will be given of another embodiment of the invention.

In the previously described embodiment, an image ID is embedded as digital watermarking in the display image, and the print image is extracted from the output database based on the image ID. In the following embodiment, the image retrieval unit 57 retrieves a similar image which is identical or similar to an image of the image data received from the computer 2, and an image ID of the similar image is acquired from the display database.

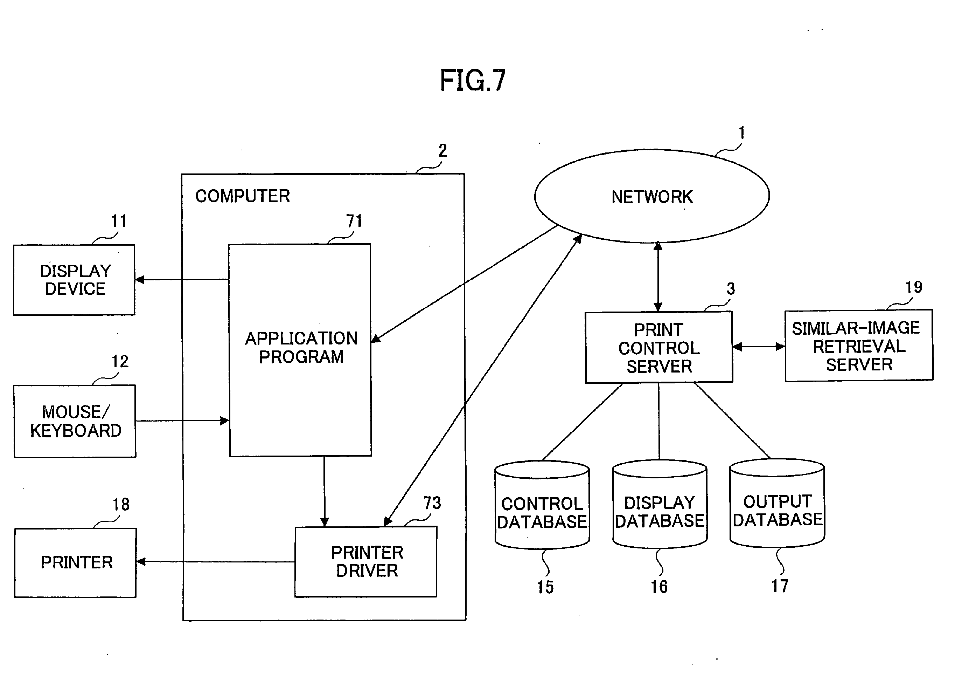

FIG. 7 shows the composition of a printing system in an embodiment of the invention. In FIG. 7, the elements which are the same as corresponding elements in FIG. 1 are designated by the same reference numerals, and a description thereof will be omitted.

The printing system of FIG. 7 differs from the printing system of FIG. 1 in that the print control server 3 of this embodiment is connected to a similar-image retrieval server 19.

Alternatively, the print control server 3 may not be connected to the similar-image retrieval server 19 and the print control server 3 may be provided to include the image retrieval unit 57.

The similar-image retrieval server 19 in this embodiment includes the image retrieval unit 57, and this similar-image retrieval server 19 retrieves a similar image which is identical or similar to an image of the image data received from the computer 2, so that an image ID of the similar image is acquired from the display database 16 in which a plurality of display images associated with a plurality of image IDs are stored.

The method of similar image retrieval is realized as follows. First, feature amounts (for example, color histograms) are extracted from display images, and a feature amount database is created. And feature amounts and image IDs are registered into the feature amount database. Then, feature amounts are acquired from a plurality of images of the retrieval object, and an image ID of a most similar image having the feature amount nearest to the feature amount of the display image is acquired. When the feature amount of the most similar image is below a predetermined threshold, it may be determined that there is no similar image.

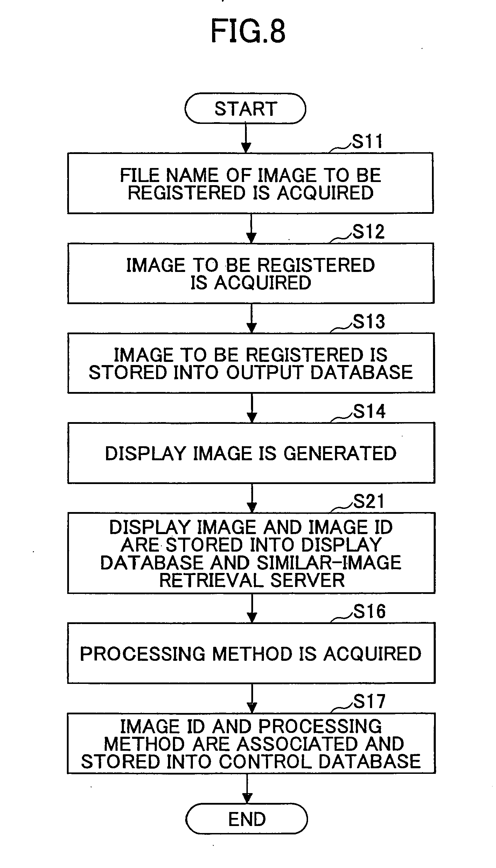

Next, FIG. 8 is a flowchart for explaining the procedure in which the printer control server 3 of this embodiment registers a print image and a display image. In FIG. 8, the steps which are the same as corresponding steps in FIG. 4 are designated by the same reference numerals, and a description thereof will be simply given.

Upon start of the procedure of FIG. 8, the printer control server 3 acquires a file name of an image of the registration object inputted by the user through the I/O device 12 (S11). After the file name is acquired, the printer control server 3 acquires the image of the registration object from the storage device 26b of the printer control server 3 (S12).

Subsequently, the printer control server 3 registers the image of the registration object into the output database 17 as a print image (S13). The printer control server 3 gives an image ID for identifying the print image to the print image based on the date of registration or the order of registration. The print image associated with the image ID is stored into the output database 17.

Subsequently, the printer control server 3 generates a display image which is used when displaying the image of the registration object in a simplified form (S14). The display image is constituted by image data with a small storage capacity to which the pixels of the image of the registration object are reduced at a predetermined rate. This image is called a thumbnail image.

After the display image is generated, the printer control server 3 registers the display image and the image ID into the display database 16 and the similar-image retrieval server 19, respectively (S21).

Alternatively, a matching image for similar image retrieval, separated from the registered image, may be prepared, and the matching image may be registered into the similar-image retrieval server.

Subsequently, the printer control server 3 acquires a processing method which is inputted by the user through the I/O device 12 (S16). The content of this step is the same as that of FIG. 4.

The printer control server 3 associates the acquired processing method with the image ID, and registers them in the control database 15 (S17). By the above processing, the print image is registered in the output database 17, the display image and the image ID are registered in the display database 16 and the similar-image retrieval server 19, and the processing method corresponding to the print image is registered in the control database 15, respectively.

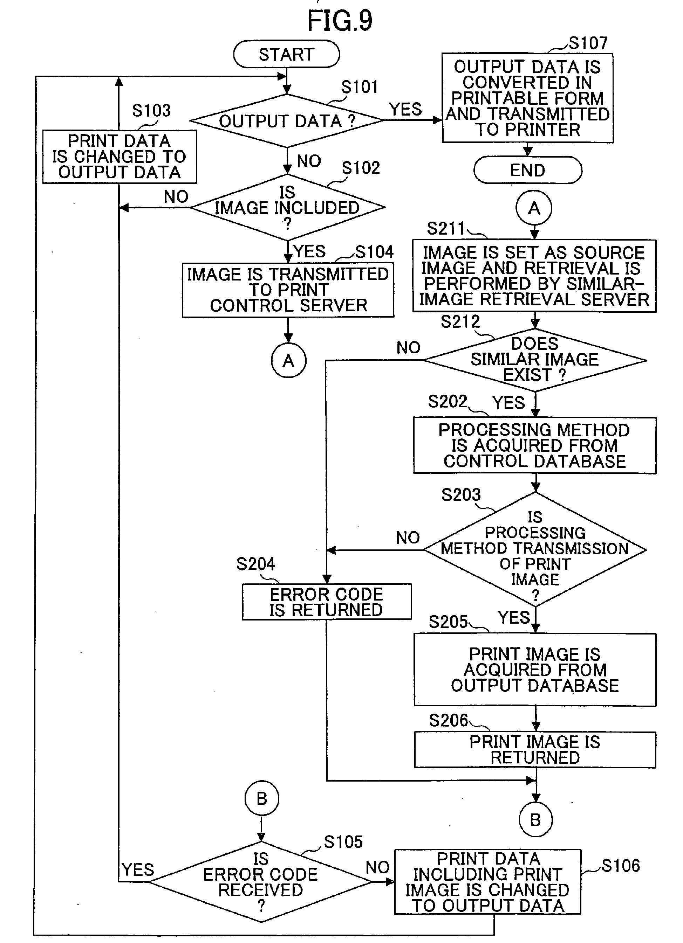

FIG. 9 is a flowchart for explaining the procedure in which the printing system of this embodiment prints a Web page.

Similar to FIG. 6, in this embodiment the original print image registered in the output database 17 is used, instead of the display image, as the image to be printed. In FIG. 9, the steps which are the same as corresponding steps in FIG. 6 are designated by the same reference numerals, and a description thereof will be given simply.

When a printing operation is performed by the application program 71 (in this embodiment, a web browser), the Web page of FIG. 5A is transmitted to the printer driver 73 by the application program 71. And the printer driver 73 generates print data from the received Web page.

Upon start of the procedure of FIG. 9, the printer driver 73 determines whether the print data is set to be output data (S101). Whether the print data is set to be output data is determined according to the active/inactive state of the judgment flag. Immediately after the print data is generated by the printer driver 73, the initial state of the judgment flag is not yet changed to the active state which indicates that the print data is set to be output data. The result of determination of step S101 for the first time is negative (No).

In this case, the image included in the print data may not be used. Namely, an image for one page may be generated from the print data. Also, a partial image, cut out from the image for one page, may be generated. When the printing object is an image of a document in a given format, the position of the partial image in the document may be determined beforehand according to the given format.

Subsequently, the printer driver 73 determines whether the print data contains an image (S102).

When an image is not included in the print data (No of step S102), the state of the judgment flag is changed to the active state, and the print data is changed to output data (S103).

When an image is included in the print data (Yes of step S102), the image-data transmitting unit 75 of the printer driver 73 transmits the image data included in the print data to the print control server 3 (S104). And the processing control is shifted to the print control server 3.

The print control server 3 uses search the display image received from the printer driver 73 as a search image, and transmits a retrieval request to the similar-image retrieval server 19 (S211). The image retrieval unit 57 of the similar-image retrieval server 19 extracts a similar image identical or similar to the display image through the method of similar image retrieval. And the image retrieval unit 57 determines whether the similar image exists (S212).

When a similar image cannot be extracted by the image retrieval unit 57 of the similar-image retrieval server 19 (No of step S212), the print control server 3 transmits a predetermined error code to the printer driver 73 (S204).

When a similar image can be extracted by the image retrieval unit 57 of the similar-image retrieval server 19 (Yes of step S212), the second image-ID extraction unit 56 acquires an image ID of the similar image and transmits the image ID to the print control server 3.

The print control server 3 accesses the control database 15 and extracts a processing method associated with the image ID from the control database 15 (S202). In this embodiment, the print control server 3 is requested that a print image is printed. The print control server 3 determines whether the extracted processing method indicates transmission of a print image (S203).

When the processing method does not indicate transmission of a print image (No of S203), the print control server 3 transmits a predetermined error code to the printer driver 73 (S204).

When the processing method indicates transmission of a print image (Yes of S203), the print image acquisition unit 53 of the print control server 3 accesses the output database 17 and acquires a print image associated with the image ID from the output database 17 (S205). Subsequently, the print control server 3 transmits the print image data to the printer driver 73 (S206).

Alternatively, the print image may be transmitted to another server (for example, image collection server) instead of the terminal device 2.

The processing control is shifted to the printer driver 73, the printer driver 73 determines whether an error code is received (S105). When an error code is received, it shows that the print image is not transmitted. The state of the judgment flag is changed to the active state, and the print data containing the display image is changed to output data (S103).

When an error code is not received (or when a print image is transmitted to the computer 2), the print-data substitution unit 76 substitutes the received print data for the display image and determines that the print data is changed to output data (S106).

Progressing to step S27, the printer driver 73 converts the output data into the data in a format that can be printed by the printer 18 concerned, and the printer communication unit 79 transmits the resulting data to the printer 18 (S107).

According to this embodiment, even if a digital watermarking is not embedded in the display image, an image ID of the display image as the object of printing can be extracted through the method of similar image retrieval, and the print control server can perform uniformly a predetermined processing of the display image.

Similar to the procedure of FIG. 6, it is not necessary to extract image data from the output database 17, and a print image may be generated through the processing of the image received from the terminal device 2.

Next, a description will be given of another embodiment of the invention. In this embodiment, a virtual printer driver 72 is provided to perform a transfer operation between the application program 71 and the printer driver 73.

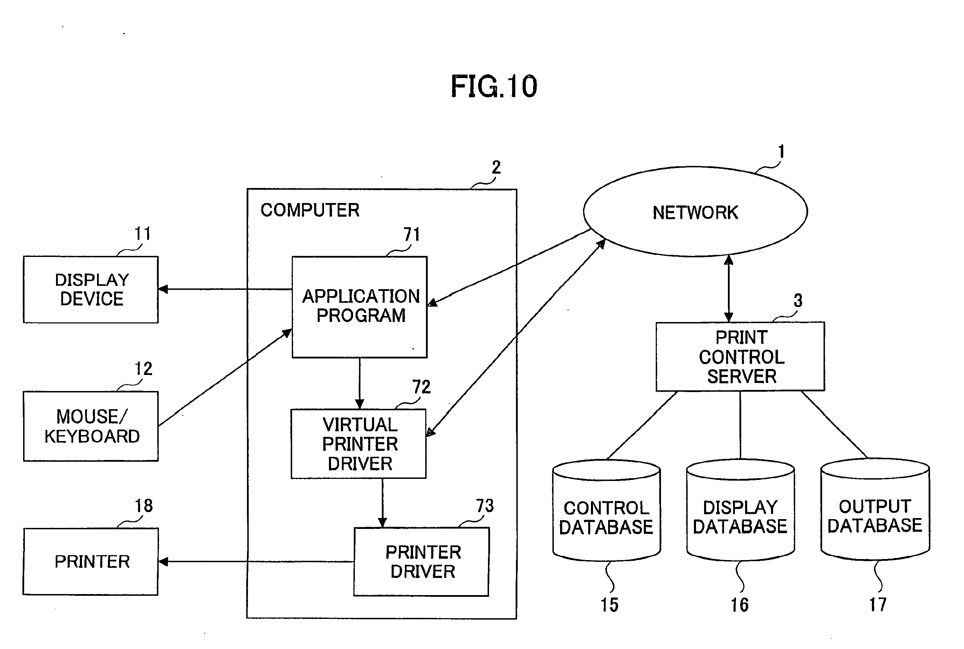

FIG. 10 shows the composition of a printing system in an embodiment of the invention. In FIG. 10, the elements which are the same as corresponding elements in FIG. 1 are designated by the same reference numerals, and a description thereof will be omitted.

The printing system of FIG. 10 differs from the printing system of FIG. 1 in that a virtual printer driver 72 is provided between the application program 71 and the printer driver 73. In this embodiment, the virtual printer driver 72 performs the processing that is performed by the printer driver 73 as in the previous embodiment.

Namely, the virtual printer driver 72 of this embodiment includes the following elements. The print-data acquisition unit 74 acquires print data from the application program 71. The print-processing-data transmitting unit 75 transmits the print data to the print control server 3. The print-data substitution unit 76 substitutes the print processing data received from the print control server 3, for a part of the print data. The print processing data receiving unit 78 receives a print processing data from the print control server 3. And the printer driver transfer unit transmits the print data substituted by the print-data substitution unit 76, to the printer driver 73. These elements of the virtual printer driver 72 may be realized by a computer-readable recording medium having program code stored thereon which, when executed by a computer, causes the computer to perform the respective functions of the elements.

With the use of the virtual printer driver 72 in the printing system, it is no longer necessary to incorporate the printing control functions according to the features of this embodiment into individual printer drivers distributed with printers and MFPs (multifunction peripherals). It is possible to assign the printing control functions for arbitrary printers.

Also, for this embodiment, it is necessary to register a print image into the print control server 3 beforehand. Since the method of registration in this embodiment is the same as the method of registration described with FIG. 4 or FIG. 8, a description thereof will be omitted. Each of the methods of registration of FIG. 4 and FIG. 8 may be used for this embodiment.

Therefore, the display image with the image ID embedded may be registered, or the display image associated with the image ID may be registered in the similar-image retrieval server 19. Suppose that, in this embodiment, the image ID is embedded in the display image as digital watermarking.

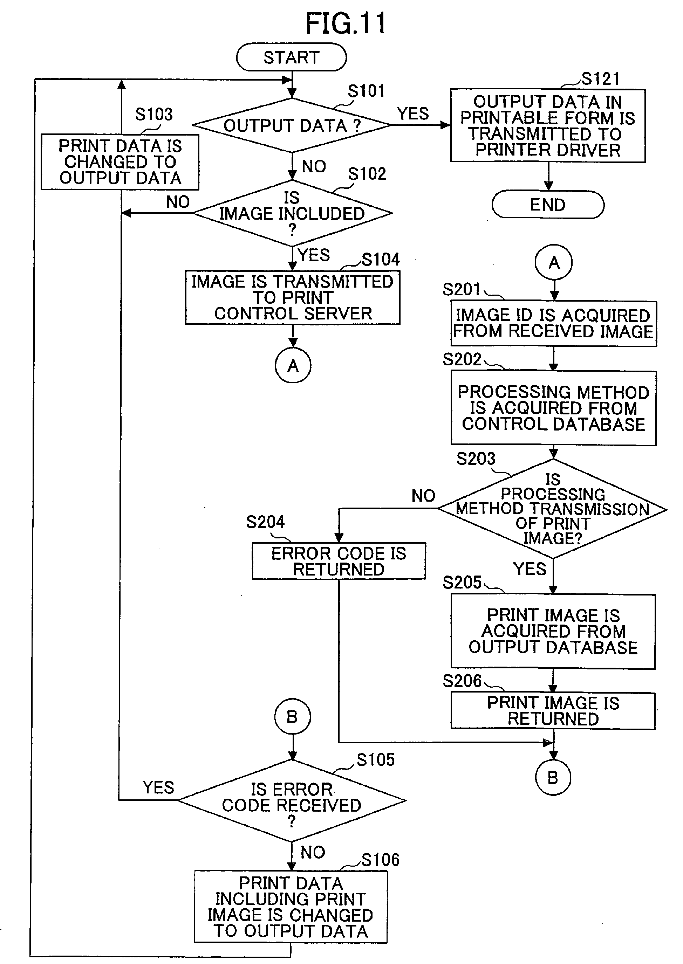

FIG. 11 is a flowchart for explaining the procedure in which the printing system of this embodiment prints a Web page. Similar to the previous embodiment, the print image registered in the output database 17 is used in this embodiment, instead of the display image, the image to be printed. In FIG. 11, the steps which are the same as corresponding steps in FIG. 6 are designated by the same reference numerals, and a description thereof will be given simply.

When a printing operation is performed by the application program 71 (in this embodiment, a Web browser), the Web page of FIG. 5A is transmitted to the virtual printer driver 72 via the printer driver 73 by the application program 71. And the virtual printer driver 72 generates print data from the received Web page.

Upon start of the procedure of FIG. 11, the virtual printer driver 72 determines whether the print data is set to be output data (S101). Whether the print data is set to be output data is determined according to the active/inactive state of the judgment flag.

Immediately after the print data is generated by the virtual printer driver 72, the initial state of the judgment flag is not yet changed to the active state which indicates that the print data is set to be output data. Thus, the result of determination of step S101 for the first time is negative (No).

Subsequently, the virtual printer driver 72 determines whether the print data contains an image (S102).

When an image is not included in the print data (No of step S102), the state of the judgment flag is changed to the active state, and the print data is changed to output data (S103). Whether the print data contains an image or not is determined by referring to the property and meta-file extension of the file of the print data.

When an image is included in the print data (Yes of step S102), the virtual printer driver 72 transmits the image data to the print control server 3 (S104). The processing control is shifted to the print control server 3.

The print control server 3 acquires an image ID embedded in digital watermarking from the received image data (S201). Alternatively, the print control server 3 may receive the image ID itself sent from the virtual printer driver 72.

Subsequently, the processing-method extraction unit 52 of the print control server 3 accesses the control database 15 and extracts a processing method associated with the image ID from the control database 15 (S202). In this embodiment, the print control server 3 is requested that a print image is printed. The print control server 3 determines whether the extracted processing method indicates transmission of a print image (S203).

When the processing method does not indicate transmission of a print image (No of S203), the print control server 3 transmits a predetermined error code to the printer driver 73 (S204).

When the processing method indicates transmission of a print image (Yes of S203), the print image acquisition unit 53 of the print control server 3 accesses the output database 17 and acquires a print image associated with the image ID from the output database 17 (S205). Subsequently, the print control server 3 transmits the print image to the virtual printer driver 72 via the network 1 (S206).

Alternatively, the print image may be transmitted to another server (for example, an image collection server) instead of the computer 2.

The processing control is shifted to the virtual printer driver 72. The virtual printer driver 72 determines whether an error code is received (S105). When an error code is received, it shows that the print image is not transmitted. The state of the judgment flag is changed to the active state, and the print data containing the display image is changed to output data (S103).

On the other hand, when an error code is not received (or when the print image is transmitted to the computer 2), the print data substitution unit 76 substitutes the received print image for the display image and determines that the print data is changed to the output data (S106).

Progressing to step S27, the virtual printer driver 72 transmits the output data to the printer driver 73 (S121). The printer driver 73 converts the output data into the data in a format that can be printed by the printer 18 concerned, and transmits the resulting data to the printer 18.

As mentioned above, according to this embodiment, the virtual printer driver 72 is provided, and transmission and reception of a print image is performed with the print control server 3 and substitution of the print image for the display image can be processed, without changing the printer driver 73. Since the virtual printer driver 72 does not restrict the printer 18 connected, the above-mentioned processing can be performed with any arbitrary printer. Thus, if the virtual printer driver 72 is provided in the printing system, the print processing can be uniformly performed by the print control server 3 using arbitrary printer.

Next, a description will be given of another embodiment of the invention. In this embodiment, before the print control server 3 performs printing, the user who operates the computer 2 is authenticated, and, if the user is allowed to access as a result of the authentication, printing of a print image is allowed.

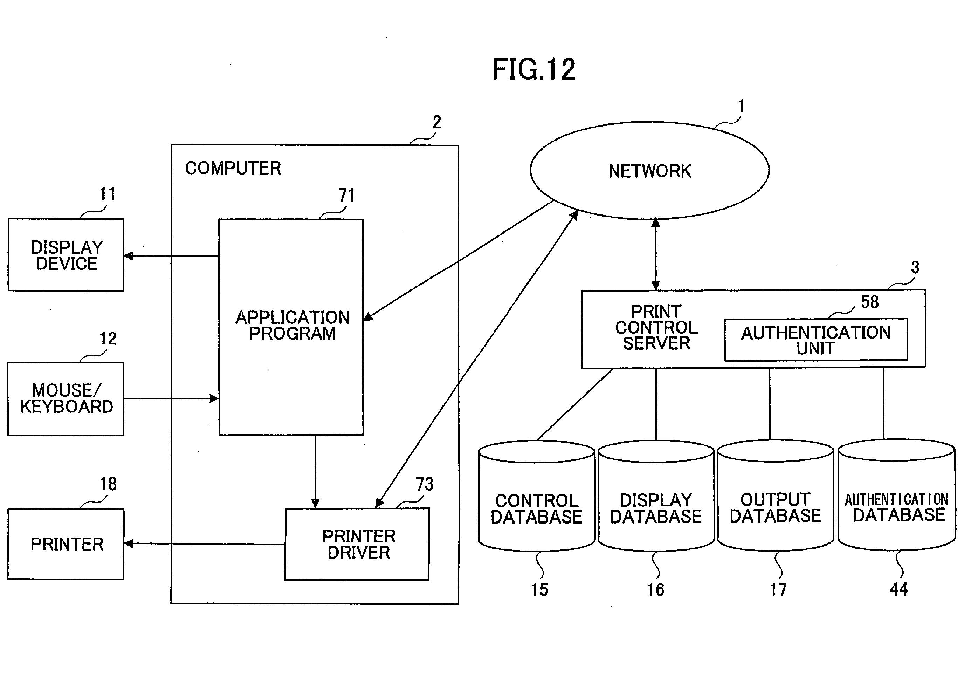

FIG. 12 shows the composition of a printing system of this embodiment. In FIG. 12, the elements which are the same as corresponding elements in FIG. 1 are designated by the same reference numerals, and a description thereof will be omitted.

The printing system of FIG. 12 differs from the printing system of FIG. 1 in that the print control server 3 of this embodiment is provided with an authentication unit 58 and an authentication database 44.

The authentication unit 58 authenticates the user based on whether the user has the right to access the print image registered in the print control server 3. The method of authentication used by the authentication unit 58 may be optional. For example, the matching of user ID and password, or the biometrical authentication of a fingerprint, a voiceprint, an iris, a vein form, etc. may be used. The authentication database 44 is a database in which a plurality of passwords or biometric information associated with user IDs are registered.

When a printing operation is performed by the application program 71, the application program 71 sends a printing request to the printer driver 73. The printer driver 73 transmits the image and the user authentication information, inputted by the user for the authentication, to the print control server 3 via the network 1. If the print control server 3 approves the access by the user, a print image is returned to the printer driver 73. The printer driver 73 performs the print processing using the received print image.

The printing system of this embodiment is provided so that it substitutes a print image for a thumbnail image (displayed with the application program 71) according to the user's right of access, and performs printing of the image.

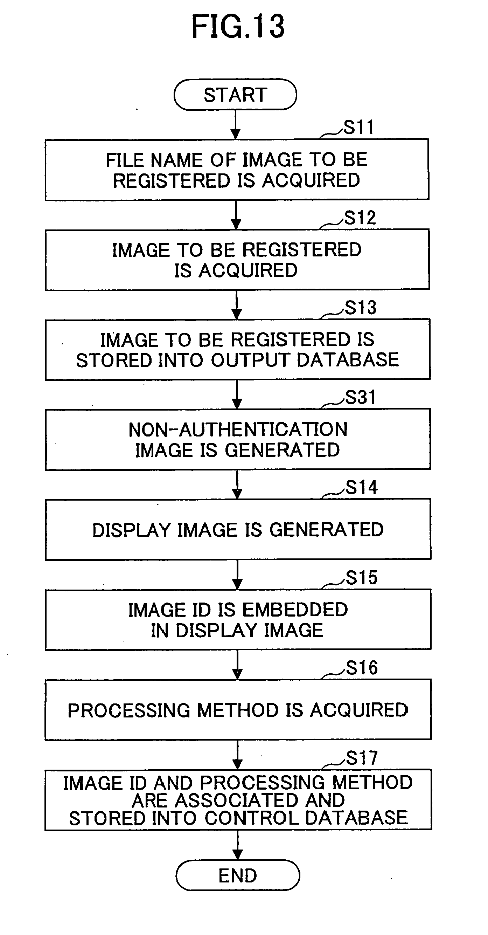

FIG. 13 is a flowchart for explaining the procedure in which the printer control server 3 registers a print image and a display image. In FIG. 13, the steps which are the same as corresponding steps in FIG. 4 are designated by the same reference numerals, and a description thereof will be given simply.

Upon start of the procedure of FIG. 13, the printer control server 3 acquires a file name of the registration object image inputted by the user through the I/O device 12 (S11). After the file name is acquired, the printer control server 3 acquires the image of the registration object from the storage device 26b of the printer control server 3 (S12).

Subsequently, the printer control server 3 registers the image of the registration object into the output database 17 by using a registration object image as a print image (S13). The printer control server 3 gives an image ID for identifying the print image to the print image based on the date of registration or the order of registration. The print image associated with the image ID is stored into the output database 17.

Subsequently, the print control server 3 generates a non-authentication image for a case where the user does not have the access right, apart from the print image (S31). The non-authentication image is associated with the image ID obtained at step S13 and it is registered into the output database 17.

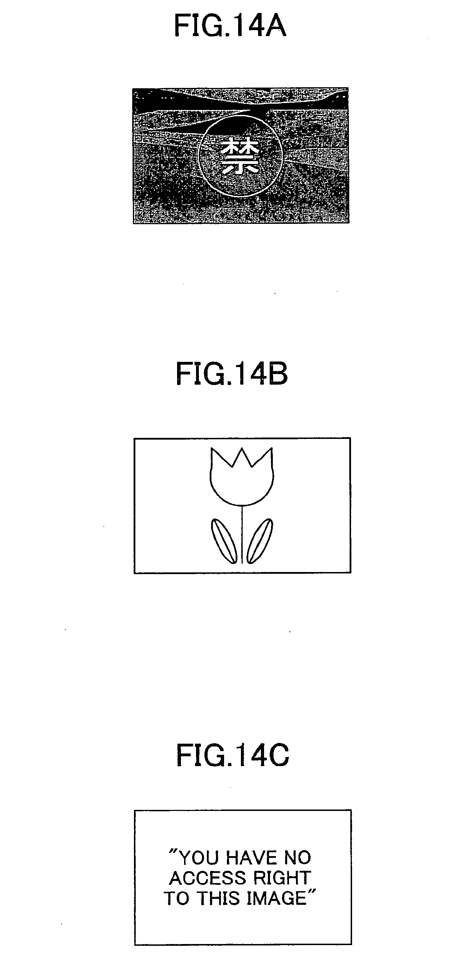

FIG. 14A, FIG. 14B and FIG. 14C show examples of non-authentication images. The non-authentication image of FIG. 14A is an image on which a given character " 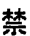 " (inhibited) is superimposed on the print image. The non-authentication image is registered so that printing of an image is not allowed to a user having no access right. The non-authentication image of FIG. 14B is an image which is completely different from the original image and substituted for the original image. And as shown in FIG. 14C, a message like "you have no access right to this image" may be superimposed to the original image. Alternatively, the non-authentication image may be indicated by image data with a fixed intensity (in deep black or plain white) in which the original image is fully concealed.

As shown in FIG. 14A, when a predetermined character is superimposed on the print image, it is preferred to create an image with a low quality level in which the pixels of the print image are reduced at a predetermined rate to decrease its quality level. Even if the quality level of the image is decreased, the contents of the original image can be grasped briefly. But the quality level of an image reproduced through scanning of a print image by a scanner becomes degraded from the quality level of the original image, and this will suppress reuse of the reproduced image by a third party.

Subsequently, the printer control server 3 generates a display image which is used when displaying the image of the registration object in a simplified form (S14). The display image is constituted by image data with a small storage capacity to which the pixels of the image of the registration object are reduced at a predetermined rate. This image is called a thumbnail image.

After the display image is generated, the printer control server 3 embeds a digital watermarking in the display image (S15). The contents of this digital watermarking are the image ID.

Subsequently, the printer control server 3 acquires a processing method which is inputted by the user through the I/O device 12 (S16).
The contents of this processing are the same as those of FIG. 4.

The printer control server 3 associates the acquired processing method with the image ID, and registers them to the control database 15 (S17). By the above processing, the print image and the non-authentication image are registered into the output database 17, the display image in which the digital watermarking is embedded is registered into the display database 16, and the corresponding processing method is registered into the display database 16, respectively.

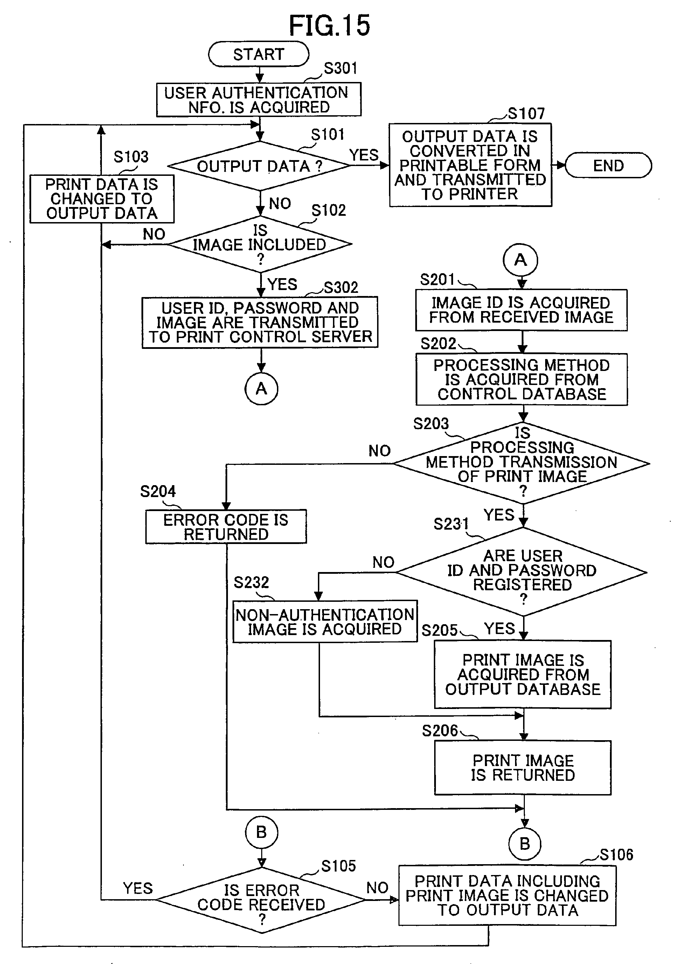

FIG. 15 is a flowchart for explaining the procedure in which the printing system of this embodiment prints a Web page as shown in FIG. 5A. In FIG. 15, the steps which are the same as the corresponding steps in FIG. 6 are designated by the same reference numerals, and a description thereof will be omitted.

In this embodiment, when a Web page is printed, the non-authentication print image or image data registered in the output database 17 are used according to a result of the user authentication, instead of the display image.

Upon start of the procedure of FIG. 15, the application program 71 (in this embodiment, a web browser) requests the user to input authentication information of the user, and the application program 71 acquires the user-input authentication information (S301).

When a printing operation is performed by the application program 71, the Web page of FIG. 5A is transmitted to the printer driver 73 from the application program 71, and a print data is generated.

The printer driver 73 determines whether the print data is set to be output data (S101). Whether the print data is set to be output data is determined according to the active/inactive state of the judgment flag, for example.

Immediately after the print data is generated by the printer driver 73, the initial state of the judgment flag is not yet changed to the active state which indicates that the print data is set to be output data. The result of determination of step S101 for the first time is negative (No).

Subsequently, the printer driver 73 determines whether the print data contains an image (S102).

When an image is not included in the print data (No of step S102), the state of the judgment flag is changed to the active state and the print data is changed to output data (S103).

When an image is included in the print data (Yes of step S102), the printer driver 73 transmits the user ID, the password, and the image, which are inputted by the user, to the print control server 3 (S302). And the processing control is shifted to the print control server 3.

The first image-ID extraction unit 55 of the print control server 3 acquires an image ID embedded in the digital watermarking from the received image data (S201). Alternatively, the print control server 3 may receive the image ID itself sent from the printer driver 73.

Subsequently, the processing-method extraction unit 52 of the print control server 3 accesses the control database 15 and extracts the processing method associated with the image ID from the control database 15 (S202). In this embodiment, the print control server 3 is requested that a print image is printed. The print control server 3 determines whether the extracted processing method indicates transmission of a print image (S203).

When the processing method does not indicate transmission of a print image (No of S203), the print control server 3 transmits a predetermined error code to the printer driver 73 (S204).

When the processing method indicates transmission of a print image (Yes of S203), the authentication unit 58 of the print control server 3 determines whether the user ID and the password inputted by the user match with the user ID and the password registered in the authentication database 44 (S231).

When the authentication unit 58 approves the user's right to access (Yes of step S231), the print-image acquisition unit 53 of the print control server 3 accesses the output database 17 and acquires a print image associated with the image ID from the output database 17 (S205). Subsequently, the print control server 3 transmits the print image to the printer driver 73 (S206). Alternatively, the print image may be transmitted to another server (for example, an image collection server) instead of the computer 2.

When the authentication unit 58 does not authenticate the user (No of step S231), the print control server 3 accesses the output database 17 and acquires a non-authentication image associated with the image ID from the output database 17 (S232). Subsequently, the print control server 3 transmits the non-authentication image to the printer driver 73 (S206).

Alternatively, the non-authentication image may be transmitted to another server (for example, an image collection server) instead of the computer 2.

The processing control is shifted to the printer driver 73. The printer driver 73 determines whether an error code is received (S105). When an error code is received, it shows that the print image is not transmitted. The state of the judgment flag is changed to the active state, and the print data containing the display image is changed to output data (S103).

On the other hand, when an error code is not received (or when the print image or the non-authentication image is transmitted to the computer 2), the print data substitution unit 76 substitutes the print image or the non-authentication image for the display image and determines that the print data is changed to the output data (S106).

Progressing to step S27, the printer driver 73 converts the output data into the data in a format that can be printed by the printer 18 concerned, and the printer communication unit 79 transmits the resulting data to the printer 18 (S107).

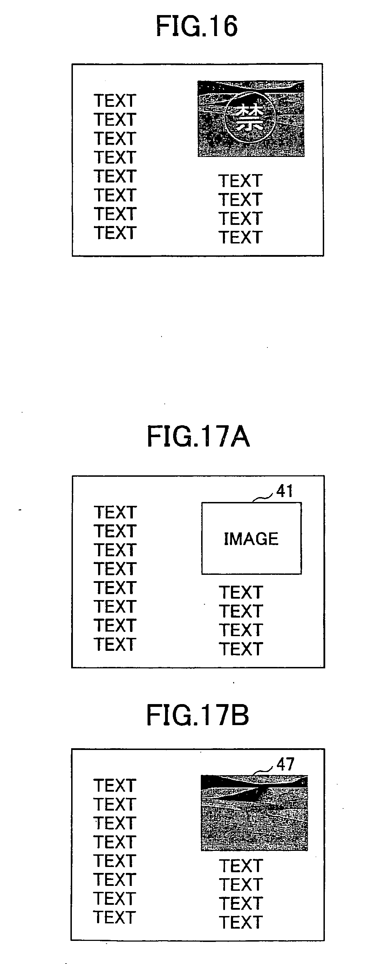

FIG. 16 shows a printed result in which a non-authentication image is substituted for a display image of a Web page and the Web page is printed when the user has no right to access.

As shown in FIG. 16, when the authenticity of the user is not approved, the non-authentication image in which the predetermined character " 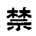 " (inhibited) is superimposed on the original image is printed.

The non-authentication image may be a low-quality image which is created from the print image by reducing the pixels of the original image at a predetermined rate without superimposing the predetermined character " 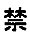 " (inhibited).

As mentioned above, according to this embodiment, when the user has the right to access, a print image received from the print control server is substituted for a display image in the image of the printing object, and when the user has no right to access, a filling-in processed image or a low-quality image is substituted for the display image.

The image data of the filling-in processed image or the low-quality image for use in this embodiment may be selected from a set of image data including image data having a resolution lower than a resolution of the original image data contained in the print data, image data created by superimposing.a predetermined character code to the original image data contained in the print data, image data having a fixed intensity (in deep black or plain white), and image data completely different from the original image data contained in the print data.

FIG. 17A shows an example of print data including a display image 41 which is displayed as a Web page on the computer 2. In FIG. 17A, the character "image" is described as an image in the display image 41 but it is not the actual image itself:

Suppose that the user has the right to access and the Web page of FIG. 17A is printed by the printing system of this embodiment. In this case, an image ID is embedded in the display image 41, a print image 47 associated with the image ID is extracted from the output database 17, and the Web page containing the print image 47 substituted for the display image 41 is printed on paper as shown in FIG. 17B.

When the user has no right to access, the Web page containing the non-authentication image (as shown in FIGs. 14A-14C) substituted for the display image 41 is printed.

In the above embodiment, one of printing of the print image and printing of the non-authentication image is selected according to the presence of the user access right. Alternatively, one of a plurality of predetermined print images may be selected according to the user access rank.

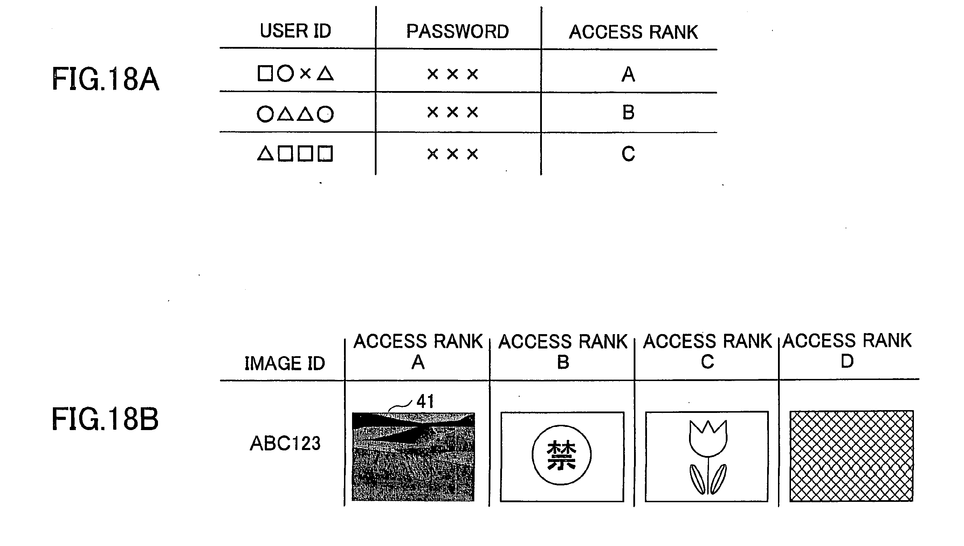

FIG. 18A shows an example of the contents of information stored in the authentication database 44 in which a plurality of user access ranks associated with user IDs are registered.

The authentication unit 58 transmits a user access rank of the user concerned to the print control server 3, when the user access right is approved.

As shown in FIG. 18B, a plurality of predetermined print images associated with a plurality of user access ranks, corresponding to an image ID, are registered in the output database 17. In the example of FIG. 18B, if the user access rank is A, a print image 41 in which pixels of the original image are not reduced is registered. If the user access rank is B, a print image in which a predetermined character " 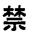 " (inhibited) is superimposed and pixels of the original image are reduced at a given rate is registered. If the user access rank is C, a print image which is completely different from the display image is registered. If the user access rank is D, a deep-black print image is registered, respectively.

Therefore, according to the user access rank, the print control server 3 is capable of selecting one of the plurality of print images registered in the output database 17 for print processing.

Alternatively, an image received from the terminal device 2 may be subjected to image processed at the print control server 3 to generate any of a print image, a non-authentication image, and a print image classified according to the user access rank, rather than being extracted from the output database 17.

Next, a description will be given of another embodiment of the invention.

In the previously described embodiment, an image contained in the document of the printing object is changed according to the processing method stored in the control database 15. In the following embodiment, the printing system performs processing for a predetermined text if the predetermined text is contained in the document of the printing object.

In a case where printing is performed without using the print control server 3, when a printing request is received from the application program 71, a GDI (Graphics Device Interface) command functions to convert the printing object into the drawing code and store the same in a journal file, for example. The printer driver 73 generates print data from this journal file. In this embodiment, the drawing code is also called print data as mentioned above.

When the text is contained in the drawing code, the printer driver 73 extracts the text from the drawing code and transmits it to the print control server 3.

The print control server 3 analyzes the text received from the printer driver 73, and when the key text which is registered beforehand is contained in the received text, the print control server 3 performs a predefined processing associated with the key text, for the received text.

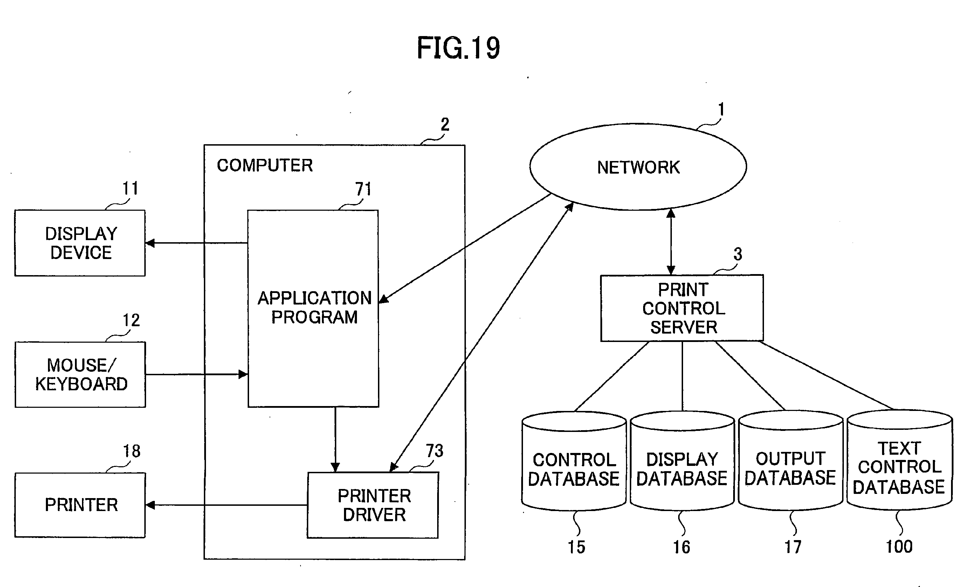

FIG. 19 shows the composition of a printing system of this embodiment. In FIG. 19, the elements which are the same as corresponding components in FIG. 1 are designated by the same reference numerals, and a description thereof will be omitted.

The printing system of FIG. 19 differs from the printing system of FIG. 1 in that the print control server 3 of this embodiment is provided further with a text control database 100 (which is equivalent to the processing-method extraction unit in the claims).

The text control database 100 is a database in which a plurality of predefined processing methods associated with a plurality of key texts are stored.

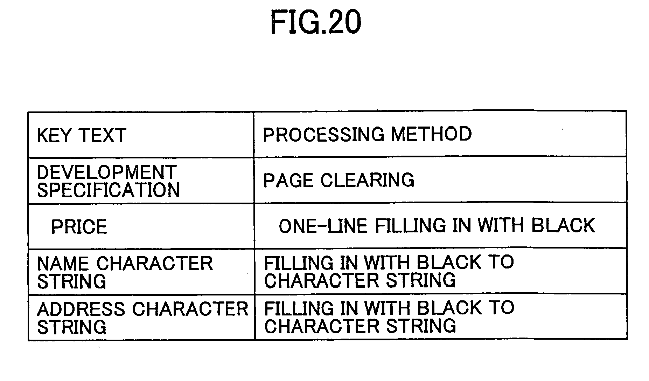

FIG. 20 shows an example of the key texts and the processing methods stored in the text control database 100.

For example, when the key text "development specification" is contained, the print control server 3 performs the page clearing processing for the whole page concerned. And when the key text "price" is contained, the print control server 3 performs processing of one-line filling-in with black for the line concerned. And when the "name character string" or the "address character string" is contained, the print control server 3 performs processing of filling-in with black to the applicable character string.

The processing method of FIG. 20 is an example. Alternatively, the processing of filling-in with "****" or the like may be substituted for the processing of filling-in with black in FIG. 20. And when the processing of page clearing is to be performed and there is sufficient space in the document of the processing object, a message, such as "The text which is equivalent to the key text cannot be printed", may be printed instead. The text after the key text is processed according to the processing method will be called processed text.

Since the hardware composition of the computer 2 and the print control server 3 in this embodiment is the same as that of FIG. 2B, a description thereof will be omitted.

In this embodiment, the print processing data acquisition unit 53 acquires a print processing data according to the printing method acquired by the processing method extraction unit 52. In this embodiment, the acquired print processing data becomes security character which will be mentioned later.

It is necessary to register the key text into the text control database 100 beforehand.
A description will be given of the processing which registers the key text and the processing method into the printer control server 3.

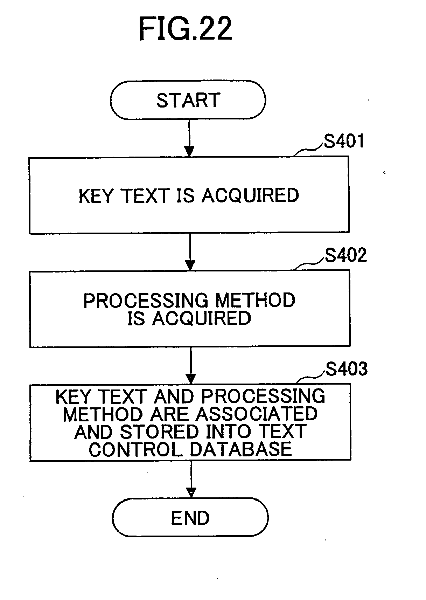

FIG. 22 is a flowchart for explaining the procedure in which the printer control server 3 in this embodiment registers a key text and a processing method. Similar to the previously described embodiment, the application program 71 in this embodiment includes a Web browser and the print control server 3 in this embodiment includes a Web application server. Or, they may include a word processor.

The key text and the processing method to be registered may be transmitted to the printer control server 3 from the storage device 26a of the computer 2, or they may be stored in the storage device 26b of the server 3.

Upon start of the procedure of FIG. 22, the printer control server 3 acquires the key text inputted by the user through the I/O device 12 (S401). The print control server 3 acquires the processing method inputted by the user through the I/O device 12 (S402).

The key text may be inputted by the user freely. Or a set of candidates of key texts may be stored in the print control server 3 beforehand and any of the stored key texts may be selected by the user. On the other hand, if the user is allowed to freely input the processing method corresponding to the key text, the burden of the print control server 3 becomes large. To avoid this, it is necessary that a set of candidates of processing methods are stored beforehand and any of them is selected by the user.

After the key text and the processing method are acquired, the printer control server 3 associates the key text and the processing method and registers them with the association into the text control database 100 (S403). A plurality of processing methods may be registered in association with a single key text. By the above processing, the key texts and the processing methods are registered into the text control database 100 with the associations.

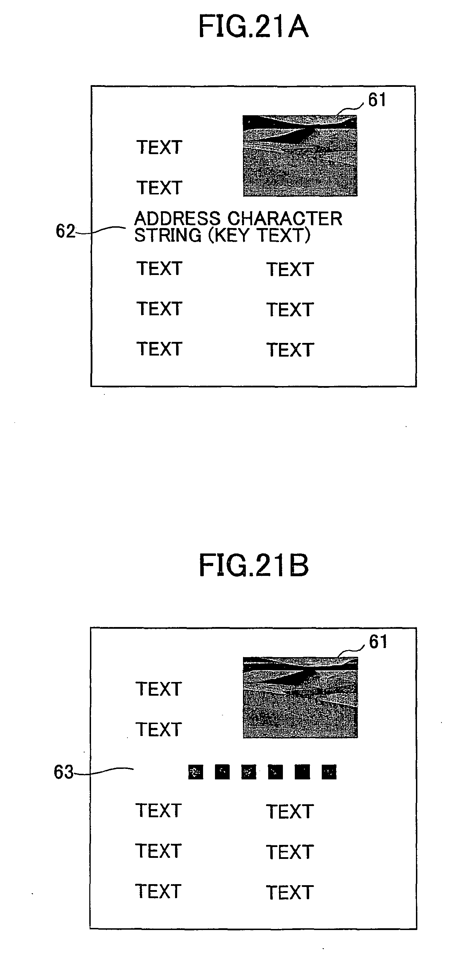

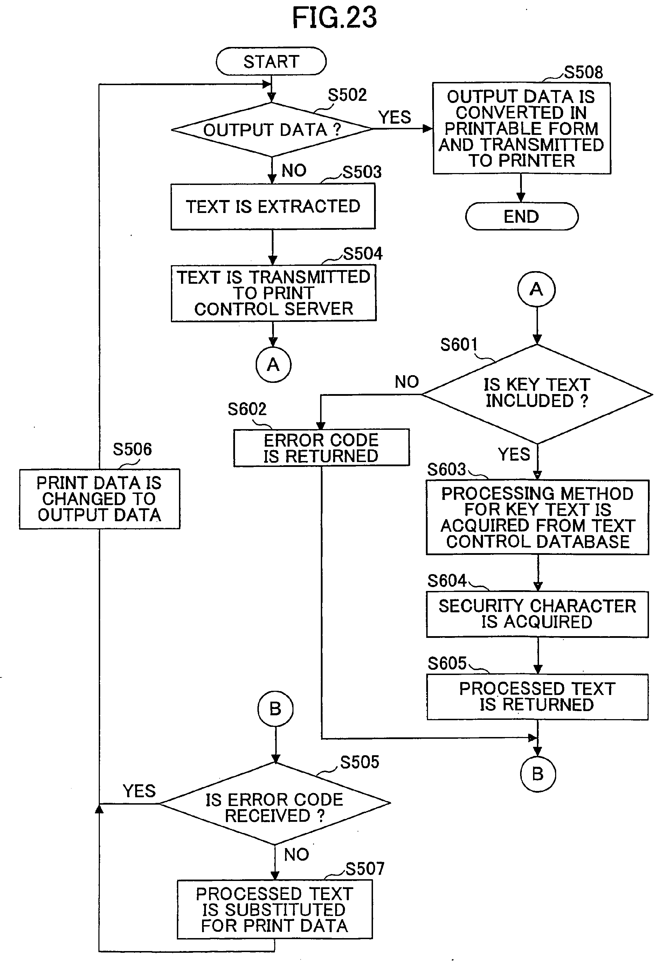

Next, FIG. 23 is a flowchart for explaining the procedure in which the printing system of this embodiment prints the Web page of FIG. 21A which is currently displayed.

As shown in FIG. 21A, the Web page to be printed contains a text and a display image 61. And a part of the text in the Web page contains an address character string 62. In this embodiment, the address character string 62 is changed according to the processing method received from the text control database 100.
Also, the display image 61 may be processed in the same manner as in the previously described embodiments.

When a printing operation is performed by the application program 71 (in this embodiment, a web browser), the Web page of FIG. 21A is transmitted to the printer driver 73 by the application program 71. And the printer driver 73 generates print data from the received Web page.

Upon start of the procedure of FIG. 23, the printer driver 73 determines whether the print data is set to be output data (S502). In this case, whether the print data is set to be output data is determined according to the active/inactive state of the judgment flag.

Immediately after the print data is generated by the printer driver 73, the initial state of the judgment flag is not yet changed to the active state which indicates that the output data is set to be output data. The result of determination of step S502 for the first time is negative (No).

Subsequently, the printer driver 73 extracts only the text portion from the print data (S503). The print-processing-data transmitting unit 75 of the printer driver 73 transmits all the extracted text to the print control server 3 (S504).

At this time, the processing control is transferred to the print control server 3. The print data receiving unit 51 of the print control server 3 receives the text data.

The printing method extraction unit 52 of the print control server 3 accesses the text control database 100 and determines whether the received text data contain a key text (S601).

When the fixed character strings, such as "development specification" or "price", are registered, whether the key text is included in the received text data is determined by searching the received text data by such key text.

When the fixed character string is not registered but the key text, such as a name of a person or an address, is registered, the printing method extraction unit 52 performs the following processing. The printing method extraction unit 52 performs a morphological analysis and determines whether each morpheme corresponds to the key text, such as an address, from a dictionary or a dependency relation. Although there are a large number of addresses and names and the number of characters is indefinite, they can be detected by using the morphological analysis.

When any key text is not included in the received text, the print control server 3 transmits a predetermined error code to the print driver 73 (S602).

On the other hand, when a key text is included in the received text, the printing method extraction unit 52 extracts a processing method associated with the key text from the text control database 100 (S603).

When the key text is contained, the print control server 3 stores the position information of the key text (or the line, the number of digits).

Subsequently, the print processing data acquisition unit 54 of the print control server 3 acquires a print processing data (or security character) according to the processing method associated with the key text (S604). Specifically, if the key text is an address, the processing method associated with the address is the processing of filling-in with black. The print processing data acquisition unit 54 generates character codes, such as "■", corresponding to the number of characters of the address as the security character. And the security character is substituted for the text character string.

Subsequently, the print control server 3 transmits the processed text to the printer driver 73 (S605). Alternatively, the processed text may be transmitted to another server (for example, a text collecting server) instead of the terminal device 2.

At this time, the processing control is shifted to the printer driver 73. The printer driver 73 determines whether an error code is received (S505).

When an error code is received, it shows that the key text is not contained in the transmitted text. The state of the judgment flag is changed to the active state, and the already generated print data is changed to output data (S506).

On the other hand, when any error code is not received (or when the processed text is transmitted to the computer 2), the print data is generated from the processed text and the print data again (S507). Thereby, the display image 61 remains unchanged and the print data with "■" is substituted for the address character string 62.

Alternatively, the security character and the position information of the key text (address character string 62) may be received from the print control server 3, and the printer driver 73 may substitute the security character for the key text.

Subsequently, the state of the judgment flag is changed to the active state, and the printer driver 73 changes the print data in which the address character string 62 is replaced by "■" to the output data (S506). Namely, the print data substitution unit 76 substitutes the received processed text for the key text and determines that the print data is changed to the output data.

Since the judgment flag is reversed, the control progresses to step S508. The printer driver 73 converts the output data into the data in a format that can be printed by the printer 18 concerned, and the printer communication unit 79 transmits the resulting data to the printer 18 (S508).

It is preferred to record a log which indicates the contents of the processing performed, the identification information of the computer 2, the user information, etc.

As described above, the printed result which is outputted by the printer 18 is as shown in FIG. 21B. In the example of FIG. 21B, the address character string 62 displayed on the Web page is replaced by "■" when the printing of the Web page is performed by the printing system of this embodiment.

According to this embodiment, if the predetermined key text is contained in the text, the printing of the Web page can be performed so as to make the character string of the key text unreadable. Since other text than the key text is printed as in the state where it is displayed, other information remains readable while security is maintained.

In this embodiment, only substitution of the predetermined text has been mentioned. Alternatively, both the predetermined text and image data may be replaced.

In the case of replacing image data, a similar image which is identical or similar to the image data of the printing object is retrieved, and a processing method which is the same as that of the retrieved image data is extracted from the control database 15.

When the text equivalent to the thesaurus or foreign language of a key text is contained in the text of the printing object, the processing method which is the same as that for the key text can be conducted for that text. Thereby, even if the text which is not completely the same as the key text is contained, the text can be printed while security is maintained.

Also in this embodiment, the virtual printer driver 72 may be provided. In such a case, the virtual printer driver 72 can perform transmission and reception of text with the print control server 3, substitution of the key text, and printing of the print image without changing the printer driver 73.

Also, similar to the previously described embodiment, the user access rank may be associated with the key text, and the contents of processing may be changed according to a specific user access rank. For example, when a printing request of a user with a high access rank is received, the printing may be performed without substituting the key text, or the amount of text to be substituted may be adjusted according to the user access rank.

As described above, the printing system of this invention can realize the print control of the print control server with low cost. Since only image data is transmitted to the print control server, the accumulated information of the print control server can be secured. And if the virtual printer driver is used, it is not necessary to incorporate a special function in individual application programs. If the computer 2 is provided with the virtual printer driver, the printing system of this invention can be applied to an arbitrary printer. Not only images but also text data can be replaced and printed as a Web page.

## Claims

1. A printing control method for use in a printing system which performs a predetermined process in response to a printing request from a terminal device and acquires print processing data, the method comprising steps of:
extracting a processing method for print data from a processing-method storage unit in which information contained in print data received from a terminal device and processing methods associated with the information are stored, by accessing the processing-method storage unit using the information as a key; and
acquiring print processing data based on the extracted processing method.

2. The printing control method according to claim 1, wherein the step of extracting the processing method includes a step of extracting an image ID from image data contained in the print data received from the terminal device.

3. The printing control method according to claim 1 or 2, wherein the step of extracting the processing method includes steps of:
retrieving a similar image which is identical or similar to an image indicated by image data contained in the print data received from the terminal device, from an image-data storage unit in which a plurality of image data are stored beforehand; and
extracting an image ID of the image data based on the similar image retrieved in the retrieving step.

4. The printing control method according to claim 2 or 3, wherein the step of acquiring the print processing data comprises accessing an output database in which a plurality of print processing data associated with image IDs are stored, using the image ID as a key, and acquire the print processing data from the output database.

5. The printing control method according to any of claims 2 to 4, further comprising a step of authenticating a user who operates the terminal device,
wherein, when the user is not authenticated as a result of the authenticating step, the step of acquiring the print processing data comprises acquiring image data having a quality level lower than a quality level of the image data contained in the received print data, or acquiring no image data.

6. The printing control method according to claim 5, wherein the image data having the quality level lower than the quality level of the image data contained in the print data is selected from among a set of image data including image data having a resolution lower than a resolution of the image data contained in the print data, image data created by superimposing a predetermined character code to the image data contained in the print data, image data having a fixed intensity, and image data different from the image data contained in the print data.

7. The printing control method according to any one of claims 1 to 6, wherein the processing-method storage unit is provided to store processing methods associated with predetermined character strings, and the step of extracting the processing method includes steps of:
accessing the processing-method storage unit by using a character string contained in the received print processing data as a key; and
extracting the processing method associated with the character string obtained from the processing-method storage unit.

8. The printing control method according to claim 7, wherein the extracted processing method specifies processing which substitutes a filling-in processed data for the character string contained in the received print processing data.

9. A printing control device which performs a predetermined process in response to a printing request from a terminal device and acquires print processing data, comprising:
a processing-method storage unit in which information contained in print data received from the terminal device and processing methods associated with the information are stored;
a processing-method extraction unit for extracting a processing method for print data from the processing-method storage unit by using the information as a key; and
a print-processing-data acquisition unit for acquiring a print processing data based on the extracted processing method.

10. The printing control device according to claim 9, wherein the processing-method extraction unit comprises a first image-ID extraction unit extracting an image ID from image data contained in the print data received from the terminal device.

11. The printing control device according to claim 9 or 10, wherein the processing-method extraction unit comprises:
an image retrieval unit retrieving a similar image which is identical or similar to an image indicated by image data contained in the print data received from the terminal device, from an image-data storage unit in which a plurality of image data are stored beforehand; and
a second image-ID extraction unit extracting an image ID of the image data based on the similar image retrieved by the image retrieval unit.

12. The printing control device according to claim 10 or 11, further comprising an output database in which print processing data associated with image IDs are stored,
wherein the print-processing-data acquisition unit is arranged to access the output database by using an image ID as a key and acquire a print processing data from the output database.

13. The printing control device according to any of claims 10 to 12, further comprising an authentication unit authenticating a user who operates the terminal device,
wherein, the print-processing-data acquisition unit is arranged to acquire image data having a quality level lower than a quality level of the image data contained in the received print data or to acquire no image data when the user is not authenticated by the authentication unit.

14. The printing control device according to claim 13, wherein the image data having the quality level lower than the quality level of the image data contained in the print data is selected from among a set of image data including image data having a resolution lower than a resolution of the image data contained in the print data, image data created by superimposing a predetermined character code to the image data contained in the print data, image data having a fixed intensity, and image data different from the image data contained in the print data.

15. The printing control device according to any one of claims 9 to 14, wherein the processing-method storage unit is provided to store processing methods associated with predetermined character strings, and the processing-method extraction unit is provided to access the processing-method storage unit by using a character string contained in the received print processing data as a key, and extract the processing method associated with the character string obtained from the processing-method storage unit.

16. The printing control device according to claim 15, wherein the processing method specifies processing which substitutes a filling-in processed data for the character string contained in the received print processing data.

17. A printing system in which the printing control device of any one of claims 9 to 16 is connected to the terminal device via a network, wherein the processing-method extraction unit of the printing control device comprises an image-ID extraction unit for extracting an image ID from image data contained in the print data received from the terminal device.

18. The printing system according to claim 17, wherein the processing-method storage unit of the printing control device is arranged to store processing methods associated with predetermined character strings, and the processing-method extraction unit is arranged to access the processing-method storage unit by using a character string contained in the received print processing data as a key, and extract the processing method associated with the character string obtained from the processing-method storage unit.

19. A terminal device which transmits a print data via a network to the printing control device of any one of claims 9 to 16 and receives print processing data via the network from the printing control device, comprising:
a print-data acquisition unit for acquiring print data of a printing object from an application program;
a print-data transmitting unit for transmitting the print data to the printing control device via the network;
a print-processing-data receiving unit for receiving a print processing data from the printing control device via the network;
a print-data substitution unit for substituting the received print processing data for part of the print data; and
a printer communication unit for transmitting the print data from the print-data substitution unit to a printer.

20. A computer program comprising program code means which, when executed by a computer, cause the computer to perform a printing controlling method according to any one of claims 1 to 8.
